# EUROPÄISCHE PATENTSCHRIFT

(11) **EP 0 644 222 B1**
(45) Veröffentlichungstag und Bekanntmachung des Hinweises auf die Patenterteilung: **15.04.1998**
(21) Anmeldenummer: 94111349.0
(22) Anmeldetag: 21.07.1994
(51) Int. Cl.: C08G 77/38, C09D 183/07

(54) **Mit Acrylatgruppen modifizierte Organopolysiloxane**
Acrylofunctional organopolysiloxanes
Organopolysiloxanes ayant des groupes acrylates

(30) Priorität: 17.09.1993 DE 4331608
(43) Veröffentlichungstag der Anmeldung: 22.03.1995
(73) Patentinhaber: Th. Goldschmidt AG, 45127 Essen (DE)
(72) Erfinder: Ebbrecht, Thomas, Dr., D-58455 Witten (DE); Lersch, Peter, Dr., D-46119 Oberhausen (DE); Wewers, Dietmar, Dr., D-46242 Bottrop (DE)

(56) Entgegenhaltungen:
- US-A- 5 260 455
- JOURNAL OF APPLIED POLYMER SCIENCE, Bd. 47, Nr. 7, 15.Februar 1993 NEW ORK, Seiten 1309-1314, XP 000420713 BRUCE J. KOKKO 'Silicone Acrylates through the Hydrosilation of polyacryloyloxy functional Monomers with copolymers of dimethyl and hydrogen methylsiloxanes'

## Beschreibung

Die Erfindung betrifft Organopolysiloxane, welche end- und/oder seitenständig mindestens eine Gruppe der Formel 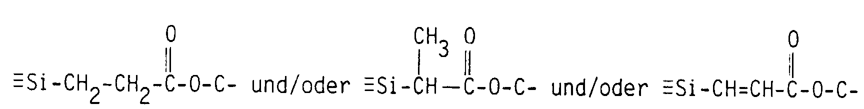 sowie mindestens eine über ein Brückenglied an diese Gruppe gebundene Acrylatgruppe aufweisen.

Mit Acrylsäureestergruppen (Acrylatgruppen) modifizierte Organopolysiloxane haben sich als mit energiereicher Strahlung härtbare Bindemittel, z.B. für Druckfarben und zur Herstellung von Lackbindemitteln oder Beschichtungsmitteln für Papier, Holz- und Metalloberflächen, bewährt. Sie können insbesondere als abhäsive Beschichtungsmittel verwendet werden. Die Härtung erfolgt insbesondere nach Zusatz bekannter Initiatoren, wie z.B. Benzophenon und seiner Derivate, durch UV-Strahlung oder Elektronenstrahlhärtung in kürzester Zeit.

Die Bindung der Acrylatgruppen enthaltenden Reste mit dem Gerüst des Organopolysiloxans kann über SiOC- oder SiC-Bindungen erfolgen. Hierzu gibt es einen umfangreichen Stand der Technik, von dem die folgenden Patentschriften als typische Beispiele ausgewählt worden sind.

Organopolysiloxane, bei denen die acrylatesterhaltigen organischen Gruppen über eine SiOC-Bindung mit dem Polysiloxangerüst verbunden sind, können nach einem Verfahren der DE-PS 27 47 233 durch Umsetzung von -COH-Gruppen aufweisenden (Meth)Acrylsäureestern mit Organopolysiloxanen, die SiX-Gruppen (X = Alkoxy-, Hydroxy- oder Chlorrest) aufweisen, dadurch hergestellt werden, daß man als Organopolysiloxane solche der Formel 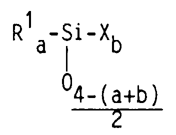
- R¹: = Alkylgruppe mit 1 bis 4 C-Atomen und/oder eine Phenylgruppe;
- X: = Chlor oder eine OR²-Gruppe;
- R²: = Alkylgruppe mit 1 bis 4 C-Atomen und/oder Wasserstoff;
- a: = 1,0 bis 2,0;
- b: = 0,02 bis 1,6;
- a+b: ≦ 2,66;
wobei das Siloxanmolekül 3 bis 100 Si-Atome aufweist und als (Meth)Acrylsäureester Pentaerythrittri(meth)acrylat verwendet, wobei, bezogen auf COH- und SiX-Gruppen, 0,05 Mol bis äquimolare Mengen des Pentaerythritesters eingesetzt werden.

In einer Modifizierung dieses Verfahrens verfährt man entsprechend der DE-PS 29 48 708 in der Weise, daß man Organopolysiloxane der Formel 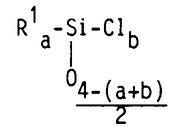 (R¹ = Alkyl mit 1 bis 4 Kohlenstoffatomen, Vinyl und/oder Phenyl, mit der Maßgabe, daß mindestens 90 Mol-% der Gruppen R¹ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Organopolysiloxane, bei denen die acrylatesterhaltigen organischen Gruppen über eine SiC-Bindung mit dem Polysiloxangerüst verbunden sind, können in typischer Weise dadurch hergestellt werden, daß man an ein Wasserstoffsiloxan einen Alkohol mit einer olefinischen Doppelbindung, z.B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z.B. in der DE-PS 38 10 140 beschrieben.

Eine weitere Möglichkeit der Herstellung acrylatmodifizierter Polysiloxane mit SiC-Verknüpfung der modifizierenden Gruppe(n) besteht darin, daß man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-PS 38 20 294 beschrieben.

Aus der DE-PS 37 10 238 sind Verbindungen der allgemeinen Formel 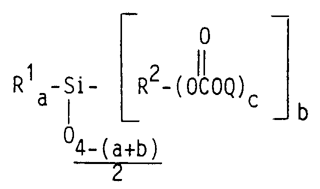 bekannt. Dabei ist
- R¹ =: Alkylgruppe mit 1 bis 4 Kohlenstoffatomen, Phenylgruppe oder Alkarylgruppe der allgemeinen Formel 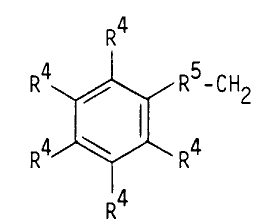
R⁴ = gleich oder verschieden und Wasserstoffrest, Alkylrest mit 1 bis 12 Kohlenstoffatomen, Halogenrest,
R⁵ = geradkettige oder verzweigte Alkylengruppe mit 1 bis 8 Kohlenstoffatomen, wobei diese Gruppen im durchschnittlichen Molekül nebeneinander vorliegen können,
- R² =: (c+1)wertige Kohlenwasserstoffbrücke mit 1 bis 20 Kohlenstoffatomen, die Ethergruppen aufweisen kann und an der seitenständig (Meth)acrylsäureester gebunden sein können,
- Q =: um eine Hydroxylgruppe verminderter Rest eines Di- oder Polyols, dessen übrige Hydroxylgruppe(n) mit (Meth)acrylsäure verestert sind, wobei die Di- oder Polyole ausgewählt sind aus der Gruppe Ethylenglykol, Propylenglykol, Glycerin, Trimethylolethan, Trimethylolpropan, Pentaerythrit und deren durch intermolekulare Kondensation entstandenen Di- oder Polymere, wobei gegebenenfalls an diese Polyole Ethylenoxid und/oder Propylenoxid angelagert sein kann,
- a =: 1,6 bis 2,2,
- b =: 0,001 bis 1,6,
- c =: 1 bis 4,
a+b ≦3.

Diese Verbindungen können dadurch hergestellt werden, daß man
a) Organopolysiloxane der allgemeinen Formel 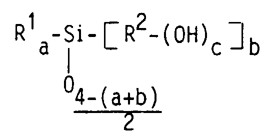 R¹, R², a, b und c wie bereits definiert, mit, bezogen auf OH-Gruppen, mindestens äquimolaren Mengen Verbindungen der allgemeinen Formel 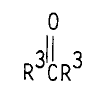 R³ = Chlorrest oder Alkoxygruppe mit 1 bis 4 Kohlenstoffatomen, umsetzt, gegebenenfalls überschüssige Verbindungen 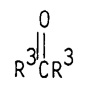 entfernt, und das erhaltene Reaktionsprodukt mit, bezogen auf R³-Reste, äquimolaren Mengen Verbindungen der allgemeinen Formel Q-OH, Q wie bereits definiert, umsetzt oder
b) zunächst Verbindungen der Formel Q-OH mit mindestens äquimolaren Mengen Verbindungen der Formel 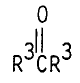 umsetzt und das Reaktionsprodukt mit äquimolaren Mengen des Organopolysiloxans unter sonst gleichen Reaktionsbedingungen wie in a) umsetzt.

Es ist ferner aus der US-PS 4 725 630 bekannt, Mercaptopropylgruppen mit Acrylsäureestern, wie z.B. Pentaerythrittri- oder Pentaerythrittetraacrylat, umzusetzen. Es ist auf die Art zwar möglich, eine der Acrylatgruppen direkt an die Mercaptopropylgruppe zu addieren, jedoch hat das Verfahren keine praktische Bedeutung erlangt, da es kostenaufwendig ist und die Produkte einen sehr unangenehmen Geruch aufweisen.

Es ist dem Fachmann geläufig, daß die acrylatmodifizierten Organopolysiloxane, bei denen die organischen Gruppen, welche den oder die Acrylatreste tragen, über SiC-Bindungen mit dem Siloxangerüst verbunden sind, hinsichtlich der Hydrolysestabilität den Verbindungen überlegen sind, bei denen die Verknüpfung über eine SiOC-Bindung erfolgt ist.

Es wäre für die Herstellung SiC-gebundener und mit Acrylatgruppen modifizierter Organopolysiloxane von erheblichem Vorteil, wenn man Verbindungen mit mindestens zwei Acrylatgruppen direkt an Wasserstoffsiloxane hydrosilylierend addieren könnte. Diese Verfahrensweise kann der Patentliteratur nicht entnommen werden.

In der Zeitschrift "Journal of Applied Polymer Science", Vol. 47, 1309 bis 1314 (1993), wird ein Verfahren beschrieben, organische Polyacrylate mit Wasserstoffsiloxanen hydrosilylierend umzusetzen. Dabei soll das organische Polyacrylat, nämlich 1,6-Hexandioldiacrylat oder Trimethylolpropantriacrylat, im erheblichen Überschuß verwendet werden, damit nur eine der zwei bzw. drei olefinischen Gruppen mit dem Wasserstoffsiloxan reagiert. Die Reaktion soll in Gegenwart von Platinkatalysatoren erfolgen. In dieser Arbeit wird berichtet, daß der Überschuß an Polyacrylat notwendig ist, um während der Hydrosilylierung oder der nachfolgenden Lagerung ein Gelieren des Produktes zu vermeiden. Das Verfahrensprodukt kann durch Strahlung ausgehärtet werden, zeigt aber eine starke Abnahme des Release-Effektes bei der Lagerung. Ein solches Produkt ist deshalb als abhäsive Beschichtungsmasse technisch nicht verwendbar.

Entsprechend der Veröffentlichung soll die Reaktion nach folgendem Schema verlaufen: 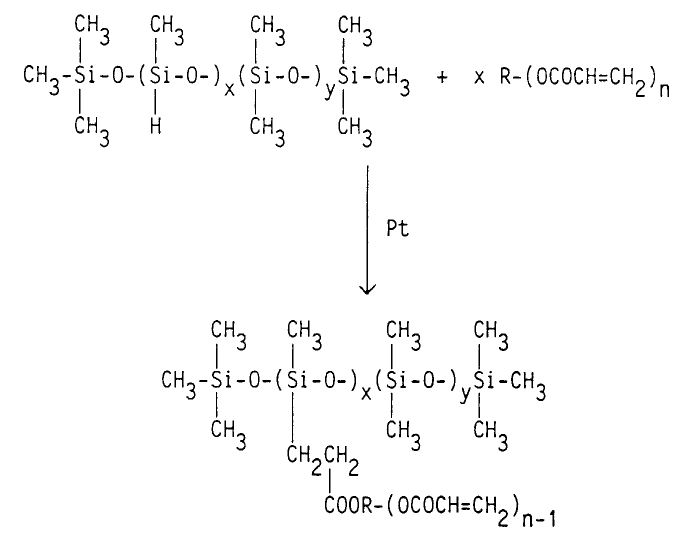 Eine Nacharbeitung dieser Verfahrensweise ergab jedoch, daß die Reaktion in anderer Weise als vorstehend beschrieben abläuft. Während dem vorgenannten Schema eine 1,2-Addition an die C=C-Doppelbindung unter Si-C-Verknüpfung zugrunde liegen würde, ergaben u. a. spektroskopische Untersuchungen, daß unter den angegebenen Verfahrensbedingungen tatsächlich eine Addition an die C=O-Doppelbindung unter Bildung der 1,2- und 1,4-Si-O-C-verknüpften Reaktionsprodukte erfolgt. 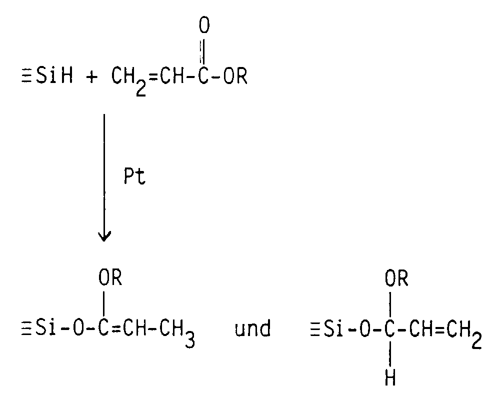 Es werden bei dem in der vorgenannten Veröffentlichung beschriebenen Verfahren Produkte mit SiOC-Verknüpfung erhalten und nicht die gewünschten mit Acrylatgruppen modifizierten Organopolysiloxane mit SiC-Verknüpfung. Es ist zu vermuten, daß die ≡Si-O-C-verknüpften Produkte für die Vergelung und die Abnahme des Release-Effektes bei Alterung verantwortlich sind.

Die vorliegende Erfindung befaßt sich mit dem technischen Problem der direkten Addition von Polyacrylaten an Wasserstoffsiloxane unter 1,2-Addition nach dem folgenden Reaktionsschema:

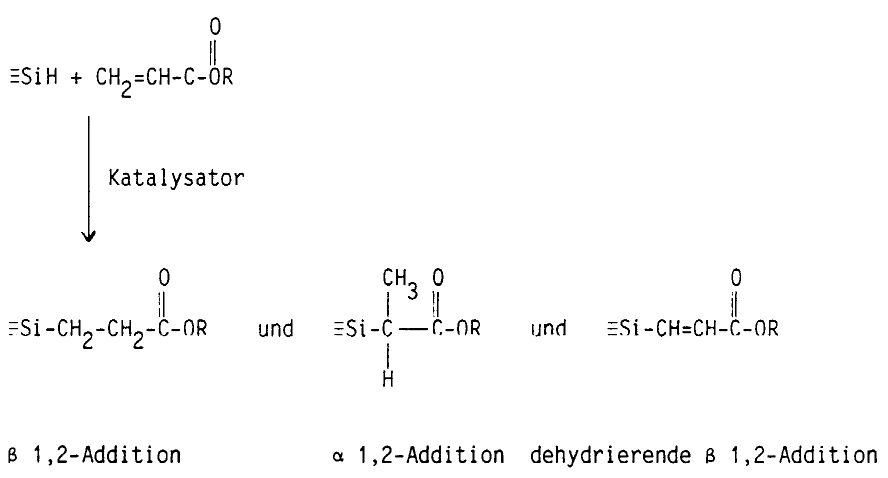

Die β-Additionsprodukte (-SiCH₂-CH₂-COOR und -Si-CH=CH-COOR) sind thermodynamisch besonders stabil und daher bevorzugte Additionsprodukte.

Überraschenderweise wurde gefunden, daß die gewünschte Si-C-Verknüpfung dann stattfindet, wenn man als Katalysatoren Rhodiumkatalysatoren verwendet. Zudem ist auch die Selektivität für die bevorzugten β 1,2-Additionsprodukte sehr hoch.

Ein Gegenstand vorliegender Erfindung sind deshalb Organopolysiloxane, welche end- und/oder seitenständig mindestens eine Gruppe der Formel 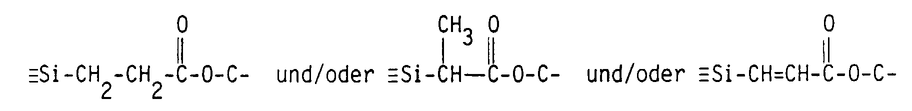 sowie mindestens eine über ein Brückenglied an diese Gruppe gebundene Acrylatgruppe aufweisen, erhältlich durch Hydrosilylierung von Organopolysiloxanen mit mindestens einer SiH-Gruppe mit Verbindungen, welche mindestens zwei Acrylatgruppen aufweisen, in äquimolaren Mengen bei Temperaturen von 60 bis 130°C, vorzugsweise 80 bis 110°C, in Gegenwart von Rhodiumkatalysatoren.

Als Rhodiumkatalysatoren verwendet man vorzugsweise solche Katalysatoren, welche aus der Gruppe RhX₃.xH₂O, RhX₃(SR²₃)₃, RhX(R³₃P)₃, RhX(CO)(R³₃P)₃, RhH(R³₃P)₄, RhR⁴₃, Rh(CO)₂R⁴, [ RhX(Olefin) ]₂, ausgewählt sind, wobei
- X: ein Halogenrest, vorzugsweise der Chlorrest,
- R³: ein Alkylrest mit 1 bis 20 Kohlenstoffatomen, ein Alkenylrest mit 2 bis 20 Kohlenstoffatomen oder der Rest R³₃SiQ (Q = zweiwertiger aliphatischer Rest mit 1 bis 6 Kohlenstoffatomen),
- R⁴: der 2,4-Pentandionatorest,
- Olefin: Cyclooctadien oder Norbornadien und
- x: eine Zahl von 0 bis 4 ist.

Besonders bevorzugt führt man die Hydrosilylierung in Gegenwart eines der folgenden Rhodiumkatalysatoren RhCl(Ph₃P)₃ (Ph = Phenyl), RhCl₃.3H₂O, [ RhCl(Ethylen)₂ ]₂ oder [ RhCl(Cyclooctadien) ]₂ durch.

Wie die Überprüfung der Verfahrensprodukte durch ¹H-, ¹³C- und ²⁹Si-NMR-Spektroskopie ergibt, erfolgt bei der rhodiumkatalysierten Hydrosilylierungsreaktion praktisch ausschließlich eine 1,2-Addition unter Bildung der gewünschten SiC-gebundenen Produkte.

Die Reaktion wird mit äquimolaren Mengen der Reaktionspartner durchgeführt, d.h., daß einer SiH-Gruppe eine Verbindung mit mindestens zwei Acrylatgruppen entspricht. Die Reaktionstemperatur beträgt etwa 60 bis 130°C, vorzugsweise 80 bis 110°C.

Die Reaktion kann in Gegenwart von inerten Lösungsmitteln, z.B. Toluol, erfolgen. Vorzugsweise wird jedoch die Verwendung von Lösungsmitteln vermieden.

Der Zusatz von Stabilisatoren, die als Polymerisationsinhibitoren wirken, ist bei der Herstellung vorteilhaft. Verwendung finden hier Phenothiazin, Methoxyphenol, Hydrochinon und Derivate davon sowie Kupfer und Kupferverbindungen.

Vorzugsweise führt man die Hydrosilylierung mit Wasserstoffpolysiloxanen der allgemeinen Formel 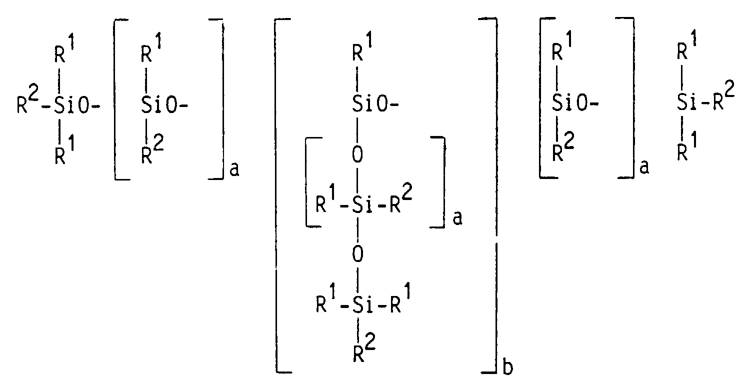 durch, in der die Reste
- R¹: gleich oder verschieden sind und Alkylreste mit 1 bis 4 Kohlenstoffatomen oder Phenylreste sind, wobei jedoch mindestens 90 % der Reste R¹ Methylreste sind,
- R²: die Bedeutung der Reste R¹ haben oder Wasserstoffreste sind, wobei jedoch mindestens ein Rest R² ein Wasserstoffrest ist,
und die Indices
- a: einen durchschnittlichen Wert von 1 bis 100 und
- b: einen durchschnittlichen Wert von 1 bis 5 haben.

Die Reste R¹, welche im Molekül gleich oder verschieden sein können, sind Alkylreste mit 1 bis 4 Kohlenstoffatomen, wie Methyl-, Ethyl-, Propyl- oder Butylreste, oder sind Phenylreste. Es muß jedoch die Bedingung erfüllt sein, daß mindestens 90 % der Reste R¹ Methylreste sind.

Mindestens ein Rest R² muß ein Wasserstoffrest sein. Die übrigen Reste R² haben dann die Bedeutung der Reste R¹. Bevorzugt sind Polysiloxane mit 2 bis 10 SiH-Gruppen.

Der Index a hat einen durchschnittlichen Wert von 0 bis 200, vorzugsweise einen durchschnittlichen Wert von 1 bis 50, b hat einen durchschnittlichen Wert von 0 bis 5, vorzugsweise von 0 bis 2.

Beispiele geeigneter organischer Acrylate sind (EO = -C₂H₄O-)
a) Diacrylate

   CH₂=CH-COO-(CH₂)ₙ-OCO-CH=CH₂ Alkyldioldiacrylat

   CH₂=CH-COO-(CH₂-CRR'-CH₂)ₙ-OCO-CH=CH₂ verzweigtes Alkyldioldiacrylat

   CH₂=CH-COO-(EO)ₘ(CH₂)ₙ(EO)ₒOCO-CH=CH₂ ethoxyliertes Alkyldioldiacrylat

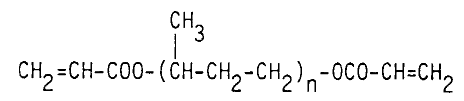

   CH₂=CH-CO-(OCH₂-CH₂)ₙ-OCO-CH=CH₂ (Poly)ethylenglykoldiacrylat

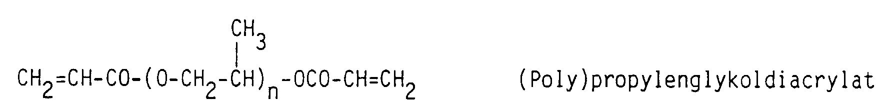

   CH₂=CH-CO-(OCH₂-CH₂-CH₂-CH₂)ₙ-OCO-CH=CH₂ (Poly)butylenglykoldiacrylat

   CH₂=CH-COO-(C₆H₄-CRR'-C₆H₄)ₙ-OCO-CH=CH₂ substituiertes Bisphenol-A-Derivat
b) Triacrylate 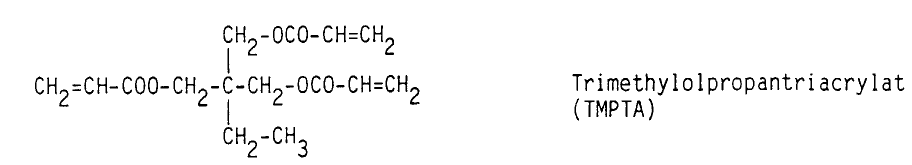 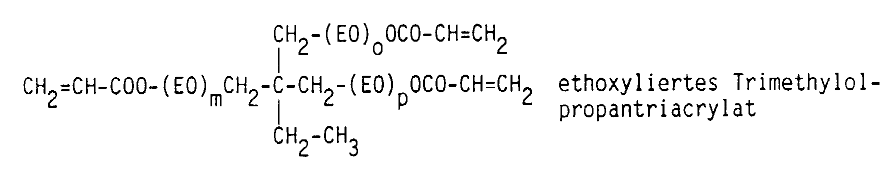 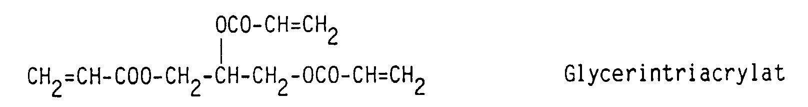 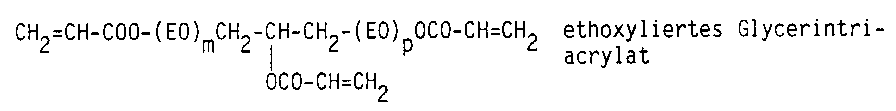
c) Tetraacrylate 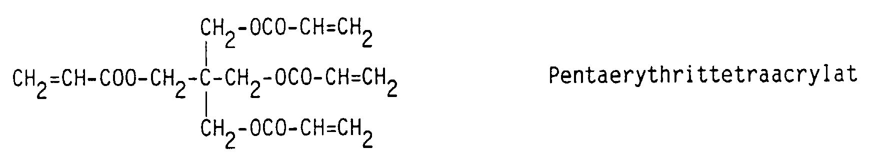 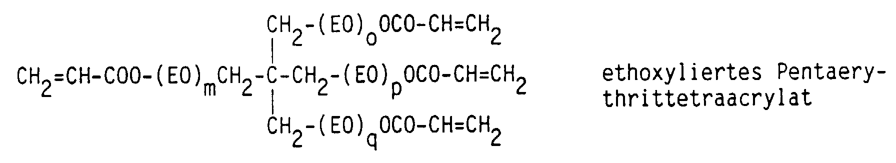
d) Multifunktionelle Acrylate

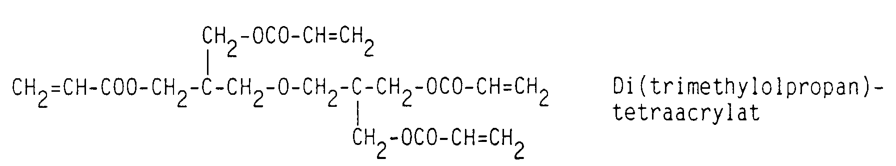

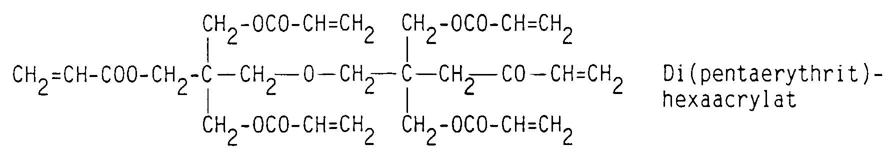

Besonders bevorzugt addiert man als Acrylatgruppen enthaltende Verbindungen Acrylsäureester zwei- bis sechswertiger aliphatischer geradkettiger oder verzweigter Alkohole an die SiH-Gruppe(n) des Organopolysiloxans.

Besonders bevorzugt addiert man als Acrylatgruppen enthaltende Verbindungen 1,6-Hexandiolacrylat, Neopentylglykoldiacrylat, Tetraethylenglykoldiacrylat, Polypropylenglykoldiacrylat, Tetraethylenglykoldiacrylat, Glycerintriacrylat, Trimethylolpropantriacrylat oder Pentaerythrittetraacrylat an das Organopolysiloxan.

Die Vorteile der vorliegenden Erfindung sind zusammengefaßt:
1. Es handelt sich um ein einfaches Verfahren mit leicht zugänglichen Ausgangsstoffen und hoher Selektivität für Si-C-verknüpfte Additionsprodukte, insbesondere für β 1,2-Produkte.
2. Ein Überschuß der Acrylatkomponente bei der Hydrosilylierung ist nicht erforderlich.
3. Die Produkte besitzen ausgezeichnete Langzeitlagerstabilität.
4. Die Aushärtung der Produkte auf Trägermaterial ist mit hoher Geschwindigkeit möglich.
5. Eine Veränderung der Abhäsivität der ausgehärteten Produkte bei der Lagerung, erkennbar durch den Anstieg der Trennwerte, ist nicht oder nur in geringem Umfang gegeben.

Es ist aufgrund der 1,2-Addition und der damit erfolgten SiC-Verknüpfung möglich, die Verfahrensprodukte mit cyclischen Siloxanen unter Säurekatalyse auf beliebige Kettenlängen zu äquilibrieren, ohne daß eine Abspaltung der modifizierenden Gruppen stattfindet.

Die erfindungsgemäßen Verbindungen können als strahlenhärtende Lacke oder Beschichtungsmassen oder als Additive in solchen Systemen eingesetzt werden. Sie können in üblicher Weise mit Härtungsinitiatoren, Füllstoffen, Pigmenten und anderen üblichen Zusatzstoffen compoundiert werden. Die erfindungsgemäßen Verbindungen können dreidimensional durch freie Radikale vernetzt werden und härten thermisch unter Zusatz von z. B. Peroxiden oder unter dem Einfluß energiereicher Strahlung wie UV- oder Elektronenstrahlen, innerhalb kürzester Zeit zu mechanisch und chemisch widerstandsfähigen Schichten aus, die bei geeigneter Zusammensetzung der erfindungsgemäßen Verbindungen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren wie z. B. Benzophenon und dessen Derivate oder Benzoin und entsprechende substituierte Benzoinderivate.

Photoinitiatoren und/oder Photosensibilisatoren werden in den die erfindungsgemäßen Organopolysiloxane enthaltenden Zusammensetzungen vorzugsweise in Mengen von 0,01 bis 10 Gew.-%, insbesondere von 0,1 bis 5 Gew.-% jeweils bezogen auf das Gewicht der acrylatfunktionellen Organopolysiloxane verwendet.

Die folgenden Beispiele erläutern die Herstellung der erfindungsgemäßen Verbindungen sowie deren anwendungstechnische Eigenschaften.

### Beispiel 1

50,1 g (0,09 mol, 0,18 val SiH) eines endständig SiH-funktionalisierten Polydimethylsiloxans der mittleren Gesamtkettenlänge N = 8 und der allgemeinen Formel HMe₂SiO(SiMe₂O)₈SiMe₂H werden mit 19,2 mg (=20 ppm Rh) Chlorotris(triphenylphosphin)rhodium(I) [ RhCl(Ph₃P)₃ ] sowie 20 mg Phenolthiazin in einem 250-ml-Vierhalskolben, ausgestattet mit Rührer, Tropftrichter, Thermometer und Rückflußkühler, vorgelegt und unter Rühren auf 80°C aufgeheizt. Bei dieser Temperatur werden 52,1 g (0,176 Mol, 0,53 val C=C) Trimethylolpropantriacrylat (Laromer TMPTA; BASF) innerhalb von 30 Minuten zugetropft. Nach beendeter Zugabe wird die Reaktionsmischung noch solange weiter bei 80°C gerührt, bis nach ca. 5 Stunden ein Umsatz von > 99 % erreicht ist. Als Umsatzkontrolle dient dabei die stündliche SiH-Wertbestimmung.

Dann wird die Reaktion abgebrochen und die Katalysatorreste aus der Reaktionsmischung durch Filtration entfernt. Durch Destillation im Ölpumpenvakuum werden flüchtige Nebenprodukte entfernt. Das in 93 %iger Ausbeute erhaltene Reaktionsprodukt ist klar, leicht rötlich gefärbt und weist eine Viskosität von 420 mPas bei 20°C auf. Eine Wärmelagerung im Dunkeln bei 70°C über einen Zeitraum > 4 Wochen beeinflußt das physikalische Erscheinungsbild des Produktes nicht, es tritt keine Vergelung auf.

Analytische Untersuchungen mittels ¹H-, ¹³C- und ²⁹Si-NMR bestätigen die erwartete Struktur und zeigen, daß das Additionsprodukt der Ausgangskomponenten durch die Formel I (entsprechend der spektroskopischen Daten) beschrieben werden kann:

R*Me₂SiO(SiMe₂O)₈SiMe₂R*

mit

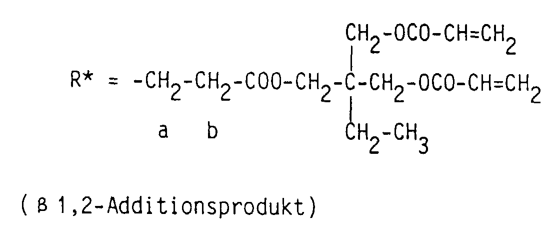

Spektroskopische Daten:
¹H-NMR (CDCl₃): δ = 0,85 (m, a), 2,35 (t, b)
²⁹Si-NMR (CDCl₃): δ = 7,5 (Si-CH₂-CH₂)
oder

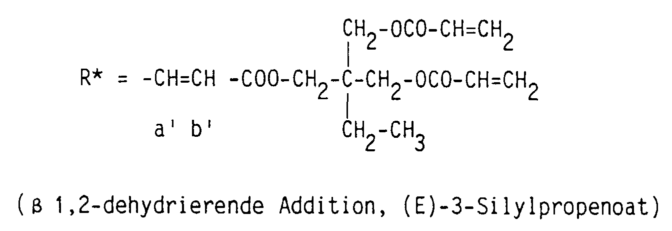

Spektroskopische Daten:
¹H-NMR (CDCl₃): δ = 6,25 ppm (d, a'), 7,16 (d, b')
²⁹Si-NMR (CDCl₃): δ = -3,9 (Si-CH=CH-)

Das Verhältnis der beiden Anlagerungsprodukte des TMPTA beträgt dabei ca. 1 : 1. Das α 1,2-Additionsprodukt war nicht detektierbar (≤ 1 %).

### Beispiel 2

In analoger Weise wie in Beispiel 1 beschrieben, werden 96,9 g (0,044 Mol) eines endständig SiH-funktionalisierten Polydimethylsiloxans der mittleren Gesamtkettenlänge N = 30 mit 26,1 g (0,088 Mol) Trimethylolpropantriacrylat unter Verwendung von 22,3 mg (=20 ppm RH) Chlorotris(triphenylphosphin)rhodium(I) [ RhCl(Ph₃P)₃ ] als Katalysator sowie 25 mg Phenothiazin als Polymerisationsinhibitor in einer Hydrosilylierungsreaktion miteinander umgesetzt. Nach der Aufarbeitung werden 115 g (entsprechend 95 % der Theorie) eines klaren Reaktionsproduktes mit einer Viskosität von 700 mPas erhalten, das entsprechend der spektroskopischen Daten durch die Formel II R*Me₂SiO(SiMe₂O)₂₈SiMe₂R* (R* identisch wie in Formel I angegeben) beschrieben werden kann.

### Beispiel 3

200 g (0,053 Mol) eines endständig SiH-funktionalisierten Polydimethylsiloxans der mittleren Gesamtkettenlänge N = 50, 30,1 g (0,10 Mol) Trimethylolpropantriacrylat, 20,8 mg (=10 ppm Rh) Chlorotris(triphenylphosphin)rhodium(I) [ RhCl(Ph₃P)₃ ] sowie 40 mg Phenothiazin als Polymerisationsinhibitor werden bei Raumtemperatur in einem 500-ml-Vierhalskolben vorgelegt. Danach wird die Mischung unter Rühren auf 100°C aufgeheizt. Nach Erreichen eines Umsatzes von > 99 % (nach ca. 2 Stunden) wird das Reaktionsprodukt in oben beschriebener Weise aufgearbeitet. Es werden 216 g (entsprechend 94 % der Theorie) eines gelben Reaktionsproduktes mit einer Viskosität von 750 mPas erhalten, das entsprechend der spektroskopischen Daten durch die allgemeine Formel R*Me₂SiO(SiMe₂O)₄₈SiMe₂R* beschrieben werden kann.

### Beispiel 4

70,0 g (0,036 Mol) eines seitenständig SiH-funktionalisierten Polydimethylsiloxans der allgemeinen Formel MD₂₀D^{H}₅M und mittleren Gesamtkettenlänge N = 27 werden mit 40 ml Toluol und 22,1 mg (=20 ppm Rh) Chlorotris(triphenylphosphin)rhodium(I) [ RhCl(Ph₃P)₃ ] sowie 24 mg Phenothiazin in einem 250-ml-Vierhalskolben, ausgestattet mit Rührer, Tropftrichter, Thermometer und Rückflußkühler, vorgelegt und unter Rühren auf 100°C aufgeheizt. Bei dieser Temperatur werden innerhalb von 30 Minuten 40,4 g (0,177 Mol) 1,6-Hexandioldiacrylat (Laromer HDDA, BASF) derart zugetropft, daß trotz einsetzender moderater exothermer Reaktion eine Temperatur von 110°C nicht überschritten wird. Nach beendeter Zugabe wird die Reaktionsmischung solange bei 100°C gerührt, bis die Umsatzkontrolle über den SiH-Wert zeigt, daß das HDDA vollständig hydrosilylierend angelagert wurde. Bei einem Umsatz von > 99 % wird die Reaktion abgebrochen. Danach wird die Reaktionsmischung filtriert und duch Destillation werden Lösungsmittel und flüchtige Nebenprodukte entfernt.

Das acrylatfunktionelle Siloxancopolymer-Reaktionsprodukt besitzt eine Viskosität von 1310 mPas und nach den Analysenergebnissen der zu erwartenden mittleren Zusammensetzung Me₃SiO(SiMe₂O)₂₀(SiMeR*O)₅SiMe₃
mit

R*= -CH₂-CH₂-COO-CH₂-(CH₂)₄-CH₂-OCO-CH=CH₂ ( β -Additionsprodukt)

oder

R*= -CH=CH-COO-CH₂-(CH₂)₄-CH₂-OCO-CH=CH₂ ((E)-3-Silylpropenoat)

entspricht.

### Beispiel 5

20,0 g des Reaktionsproduktes aus Beispiel 1 (0,017 Mol) werden mit 117,2 g Dekamethylcyclopentasiloxan (0,31 Mol) und 0,39 g (0,3 Gew.-%) Trifluormethansulfonsäure 6 Stunden lang unter einer Stickstoffatmosphäre bei 100°C gerührt. Während des Abkühlens der Reaktionsmischung werden 2,6 g Na₂CO₃ und 0,5 g destilliertes H₂O hinzugegeben und solange gerührt, bis eine Prüfung der Mischung auf Säurespuren negativ ausfällt. Nach dem Filtrieren werden die flüchtigen Bestandteile bei 80°C und 2 Torr destillativ entfernt. Es werden 123 g (entsprechend 90 % der Theorie) eines gelben leicht trüben Produktes mit einer Viskosität von 1520 mPas erhalten, daß gemäß der analytischen Untersuchung mittels NMR-Spektroskopie eine mittlere Kettenlänge von 100 und in der Gelpermeationschromatographie (GPC) einen gleichmäßigen Peak für eine monomodale Molekulargewichtsverteilung aufweist und durch die Formel R*Me₂SiO(SiMe₂O)₉₈SiMe₂R* beschrieben werden kann.

### Beispiel 6

34,3 g (0,06 Mol, 0,12 val SiH) eines endständig SiH-funktionalisierten Polydimethylsiloxans der mittleren Gesamtkettenlänge N = 8 und der allgemeinen Formel HMe₂SiO(SiMe₂O)₈SiMe₂H werden mit 8,2 mg (=15 ppm Rh) Chlorotris(triphenylphosphin)rhodium(I) [ RhCl(Ph₃P)₃ ] sowie 12 mg Phenothiazin in einem 250-ml-Vierhalskolben, ausgestattet mit Rührer, Tropftricher, Thermometer und Rückflußkühler, vorgelegt und unter Rühren auf 90°C aufgeheizt. Bei dieser Temperatur werden 23,7 g (0,12 Mol, 0,24 val C=C) 1,4-Butandioldiacrylat innerhalb von 20 Minuten so zugetropft, daß trotz exothermer Reaktion die Temperatur nicht über 100°C steigt. Nach beendeter Zugabe wird die Reaktionsmischung noch solange weiter bei 100°C gerührt, bis nach ca. 2 Stunden ein Umsatz von > 99 % erreicht ist.

Nach Abkühlen und Aufarbeitung wird in 95 %iger Ausbeute ein klares, niedrigviskoses Reaktionsprodukt erhalten, das entsprechend den spektroskopischen Daten der erwarteten Struktur R*Me₂SiO(SiMe₂O)₈SiMe₂R*
mit

R*= -CH₂-CH₂-COO-CH₂-CH₂-CH₂-CH₂-OCO-CH=CH₂ ( β-Additionsprodukt)

oder

R*= -CH=CH-COO-CH₂-CH₂-CH₂-CH₂-OCO-CH=CH₂ ((E)-3-Silylpropenoat)

entspricht.

### Nicht erfindungsgemäße Beispiele

### Beispiel 7

Die Arbeitsweise von Beispiel 1 wird wiederholt mit der Abänderung, daß anstelle des Rhodiumkatalysators eine 20 ppm Platin entsprechende Menge Karstedt-Katalysator als Hydrosilylierungskatalysator verwendet wird. Dabei konnte kein flüssiges Reaktionsprodukt erhalten werden. Stattdessen vergelte der Ansatz nach ca. 3 Stunden Reaktionszeit.

### Beispiel 8

Es wurde die Arbeitsweise von Beispiel 7 wiederholt mit der Abänderung, daß mit einem Trimethylolpropantriacrylat-Überschuß gearbeitet wurde. So wurden in Analogie zu Beispiel 1 50,1 g (0,09 Mol, 0,18 val SiH) eines endständig SiH-funktionalisierten Polydimethylsiloxans der mittleren Gesamtkettenlänge N = 8 mit einer 20 ppm Platin entsprechenden Menge in Form des Karstedt-Katalysators sowie 20 mg Phenothiazin vorgelegt und nach Aufheizen auf 80°C unter Rühren 60,1 g (0,203 Mol, 0,61 val C=C) TMPTA innerhalb von 30 Minuten zugetropft. Nach beendeter Zugabe wird die Reaktionsmischung noch solange weiter bei 80°C gerührt, bis nach ca. 4 Stunden ein Umsatz von > 99 % erreicht ist. Nach Entfernen der Katalysatorreste durch Filtration wird ein milchig weißes Reaktionsprodukt mit einer Viskosität von 970 mPas erhalten. Im Gegensatz zum erfindungsgemäßen Produkt aus Beispiel 1 ist das Produkt nicht lagerstabil. Auch bei Dunkellagerung bei Raumtemperatur steigt mit zunehmender Lagerzeit die Viskosität an und nach ca. 5 Tagen ist das Reaktionsprodukt eine weiche, weiße Gelmasse geworden.

Analytische Untersuchungen mittels ¹H-, ¹³C- und ²⁹Si-NMR zeigen, daß das Additionsprodukt der Ausgangskomponenten (entsprechend der spektroskopischen Daten) im wesentlichen aus Si-O-C-verknüpften Produkten, die aus einer 1,4-Addition resultieren, beschrieben werden kann und daß der Gehalt an Si-C-verknüpften Produkten in der Reaktionsmasse geringer als 10 Gew.-% ist.

### Beispiel 9

Die Verfahrensweise der Beispiele 7 und 8 wurde dahingehend abgeändert, daß in Analogie zu der Vorschrift im Journal of Applied Polymer Science, Vol.47, 1309-1314 (1993) gearbeitet wurde, d. h. das molare Verhältnis von TMPTA zu SiH wurde noch weiter auf den Wert von 1,5 : 1 erhöht und die Reaktion unter Zusatz einer kleinen Menge Toluol durchgeführt. Bereits nach 2 Stunden Reaktionszeit wurde ein Umsatz > 99 % erreicht. Die analytische Untersuchung des milchig, weißen Reaktionsproduktes mittels ¹H-, ¹³C- und ²⁹Si-NMR zeigt allerdings, daß auch diesmal das Additionsprodukt der Ausgangskomponenten (entsprechend der spektroskopischen Daten) im wesentlichen aus den aus einer 1,4-Addition resultierenden Si-O-C-verknüpften Produkten besteht. Auch dieses Produkt ist nicht langzeitlagerstabil. Aufgrund des höheren Verdünnungsgrades durch den höheren TMPTA-Anteil ist die Viskositätserhöhung zwar weniger ausgeprägt, dennoch ist auch hier das Reaktionsprodukt nach ca. 14 Tagen Dunkellagerung bei Raumtemperatur vollständig vergelt.

### Anwendungstechnische Überprüfung

Zur Überprüfung der anwendungstechnischen Eigenschaften der erfindungsgemäß zu verwendenden Substanzen werden die Produkte der Beispiele sowie die nicht erfindungsgemäßen Vergleichsbeispiele auf flächige Träger (orientierte Polypropylenfolie) aufgetragen und durch Einwirkung von 2 MRad Elektronenstrahlen (ESH) gehärtet bzw. nach Zugabe des Photoinitiators (Darocure® 1173, Giba Geigy) durch Einwirkung von ultraviolettem Licht (UVH) mit 120 W/cm mit Bahngeschwindigkeiten von 20 m/min gehärtet. Die Auftragsmenge beträgt in jedem Fall ca. 0,8 g/m².

### Trennwert

Für die Ermittlung der Trennwerte werden verschiedene, 25 mm breite Klebebänder der Firma Beiersdorf verwendet, und zwar ein mit Acrylatkleber beschichtetes Klebeband, das im Handel unter der Bezeichnung TESA® 7475 erhältlich ist, sowie mit Kautschukkleber beschichtete Klebebänder, welche im Handel unter den Bezeichnungen TESA® 7476 und TESA® 4154 erhältlich sind. Zur Messung der Abhäsivität werden diese Klebebänder auf den Untergrund aufgewalzt und anschließend im Falle von TESA® 4154 bei 70°C und im Falle von TESA® 7475 und TESA® 7476 bei 40°C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennwert bezeichnet. Die allgemeine Testprozedur entspricht im wesentlichen der FINAT Testmethode Nr. 10. Zur Überprüfung des Alterungsverhaltens wird die Lagerzeit auf 7 und 14 Tage unter den oben beschriebenen Bedingungen verlängert.

### Loop-Test

Der Loop-Test dient zur schnellen Ermittlung des Härtungsgrades einer Trennbeschichtung. Hierzu wird ein etwa 20 cm langer Streifen eines Klebebandes von der Firma Beiersdorf, das im Handel unter der Bezeichnung TESA® 4154 erhältlich ist, 3mal auf den Untergrund aufgewalzt und sofort wieder abgezogen. Dann wird durch Zusammenlegen der Enden des Klebebandes eine Schlaufe gebildet, so daß die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft

Die Bestimmung der Restklebkraft erfolgt gemäß der FINAT Testvorschrift Nr. 11. Hierzu wird das Klebeband TESA® 7475 der Firma Beiersdorf auf den Untergrund aufgewalzt und anschließend bei 70°C unter einem Gewicht von 70 g/cm² gelagert. Nach 24 Stunden wird das Klebeband vom Untergrund getrennt und auf einen Stahlplatte aufgewalzt. Nach einer Minute wird die Kraft gemessen, die benötigt wird, um das Klebeband mit einer Geschwindigkeit von 30 cm/min unter einem Schälwinkel von 180° der Stahlplatte abzuziehen. Der so gemessene Wert wird durch den Wert geteilt, den ein unbehandeltes Klebeband unter ansonsten gleichen Testbedindungen ergibt. Das Ergebnis wird als Restklebkraft bezeichnet und in der Regel in Prozent angegeben.

### Restklebkräfte und Loop-Tests der erfindungsgemäßen Beispiele 1 bis 6 sowie der Vergleichsbeispiele 8 und 9

| Beispiel | Restklebkraft | Loop-Test |
|---|---|---|
| 1 | 96 % | i.O. |
| 2 | 93 % | i.O. |
| 3 | 91 % | i.O. |
| 4 | 95 % | i.O. |
| 5 | 85 % | i.O. |
| 6 | 92 % | i.O. |
| 8 | < 50 % | nicht i.O. |
| 9 | 78 % | i.O. |

### Ermittelte Trennwerte der erfindungsgemäßen Beispiele 1 bis 6

| Beispiel 1 | | | | |
|---|---|---|---|---|
| Härtung | Trennwert Tesa® 4154 | Trennwert Tesa® 7475 | | |
| | | 1 Tag | 7 Tage | 14 Tage |
| ESH | 851 cN | 2135 cN | 2090 cN | 2140 cN |

| Beispiel 2 | | | | | | |
|---|---|---|---|---|---|---|
| Härtung | Trennwert Tesa® 7475 | | | Trennwert Tesa® 7476 | | |
| | 1 Tag | 7 Tage | 14 Tage | 1 Tag | 7 Tage | 14 Tage |
| UVH | 291 cN | 306 cN | 281 cN | 104 cN | 118 cN | 115 cN |
| ESH | 272 cN | 288 cN | 278 cN | 178 cN | 189 cN | 205 cN |

| Beispiel 3 | | | | | | |
|---|---|---|---|---|---|---|
| Härtung | Trennwert Tesa® 7475 | | | Trennwert Tesa® 7476 | | |
| | 1 Tag | 7 Tage | 14 Tage | 1 Tag | 7 Tage | 14 Tage |
| UVH | 13 cN | 13 cN | 11 cN | 63 cN | 60 cN | 61 cN |

| Beispiel 4 | | |
|---|---|---|
| Härtung | Trennwert Tesa® 4154 | Trennwert Tesa® 7475 |
| ESH | 289 cN | 228 cN |

| Beispiel 5 | | | | | | |
|---|---|---|---|---|---|---|
| Härtung | Trennwert Tesa® 7475 | | | Trennwert Tesa® 7476 | | |
| | 1 Tag | 7 Tage | 14 Tage | 1 Tag | 7 Tage | 14 Tage |
| UVH | 7 cN | 10 cN | 12 cN | 43 cN | 42 cN | 47 cN |

| Beispiel 6 | | |
|---|---|---|
| Härtung | Trennwert Tesa® 4154 | Trennwert Tesa® 7475 |
| UVH | 234 cN | 554 cN |

### Trennwerte des nicht erfindungsgemäßen Vergleichsbeispiels 9

| Härtung | Trennwert Tesa® 4154 | Trennwert Tesa® 7475 | | |
|---|---|---|---|---|
| | 1 Tag | 1 Tag | 7 Tage | 14 Tage |
| ESH | Del.*) | 750 cN | 1632 cN | 2103 cN |

| | | | | |
|---|---|---|---|---|
| *) Delaminierung (Ablösung der Trennbeschichtung vom Substrat) | | | | |

## Patentansprüche

1. Organopolysiloxane, welche end- und/oder seitenständig mindestens eine Gruppe der Formel 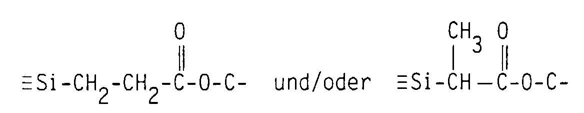 und/oder 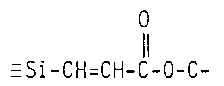 sowie mindestens eine über ein Brückenglied an diese Gruppe gebundene Acrylatgruppe aufweisen, erhältlich durch Hydrosilylierung von Organopolysiloxanen mit mindestens einer SiH-Gruppe mit Verbindungen, welche mindestens zwei Acrylatgruppen aufweisen, in äquimolaren Mengen bei Temperaturen von 60 bis 130°C in Gegenwart von Rhodiumkatalysatoren.

2. Organopolysiloxane nach Anspruch 1, dadurch gekennzeichnet, daß man die Hydrosilylierung mit Wasserstoffpolysiloxanen der allgemeinen Formel 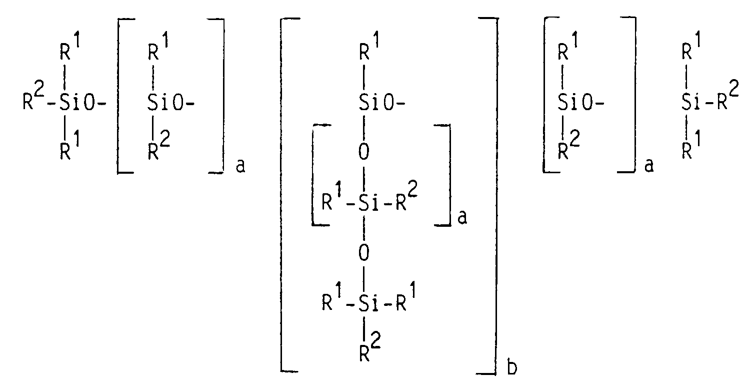 in der die Reste
R¹ gleich oder verschieden sind und Alkylreste mit 1 bis 4 Kohlenstoffatomen oder Phenylreste sind, wobei jedoch mindestens 90 % der Reste R¹ Methylreste sind,
R² die Bedeutung der Reste R¹ haben oder Wasserstoffreste sind, wobei jedoch mindestens ein Rest R² ein Wasserstoffrest ist,
und die Indices
a einen durchschnittlichen Wert von 0 bis 100 und
b einen durchschnittlichen Wert von 0 bis 5 haben,
durchführt.

3. Organopolysiloxane nach Anspruch 1 oder 2, dadurch gekennzeichnet, daß man als Acrylatgruppen enthaltende Verbindungen Acrylsäureester zwei- bis sechswertiger aliphatischer geradkettiger oder verzweigter Alkohole an die SiH-Gruppe(n) des Organopolysiloxans addiert.

4. Organopolysiloxane nach Anspruch 3, dadurch gekennzeichnet, daß man als Acrylatgruppen enthaltende Verbindungen 1,6-Hexandiolacrylat, Neopentylglykoldiacrylat, Tetraethylenglykoldiacrylat, Polypropylenglykoldiacrylat, Glycerintriacrylat, Trimethylolpropantriacrylat oder Pentaerythrittetraacrylat an das Organopolysiloxan addiert.

5. Organopolysiloxane nach einem oder mehreren der vorhergehenden Ansprüche, dadurch gekennzeichnet, daß man die Hydrosilylierung in Gegenwart von Rhodiumkatalysatoren durchführt, welche aus der Gruppe RhX₃.xH₂O, RhX₃(SR²₃)₃, RhX(R³₃P)₃, RhX(CO)(R³₃P)₃, RhH(R³₃P)₄, RhR⁴₃, Rh(CO)₂R⁴, [ RhX(Olefin) ]₂, ausgewählt sind, wobei
X ein Halogenrest, vorzugsweise der Chlorrest,
R³ ein Alkylrest mit 1 bis 20 Kohlenstoffatomen, ein Alkenylrest mit 2 bis 20 Kohlenstoffatomen oder der Rest R³₃SiQ (Q = zweiwertiger aliphatischer Rest mit 1 bis 6 Kohlenstoffatomen),
R⁴ der 2,4-Pentandionatorest,
Olefin Gyclooctadien oder Norbornadien und
x eine Zahl von 0 bis 4 ist.

6. Organopolysiloxane nach Anspruch 5, dadurch gekennzeichnet, daß man die Hydrosilylierung in Gegenwart eines der folgenden Rhodiumkatalysatoren RhCl(Ph₃P)₃ (Ph = Phenyl), RhCl₃.3H₂O, [ RhCl(Ethylen)₂ ]₂ oder [ RhCl(Cyclooctadien) ]₂ durchführt.

7. Verwendung der Organopolysiloxane nach Anspruch 1 bis 5 als härtbare Bindemittel oder als härtbare, abhäsive Beschichtungsmassen allein oder in Mischung mit weiteren, an sich bekannten härtbaren Beschichtungsmassen auf Acrylatbasis.

## Claims

1. Organopolysiloxanes having terminally and/or laterally at least one group of the formula 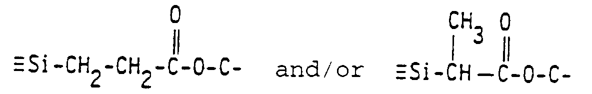 and/or 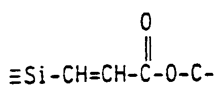 and, attached to this group by way of a bridging link, at least one acrylate group, obtainable by hydrosilylation of organopolysiloxanes having at least one SiH group with compounds having at least two acrylate groups in equimolar amounts at temperatures from 60 to 130°C in the presence of rhodium catalysts.

2. Organopolysiloxanes according to Claim 1, characterized in that the hydrosilylation is carried out with hydridopolysiloxanes of the general formula 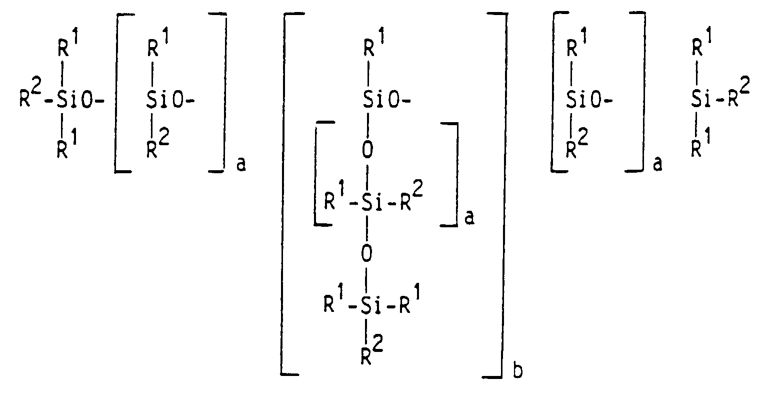 in which the radicals
R¹ are identical or different and are alkyl radicals having 1 to 4 carbon atoms or phenyl radicals, but at least 90% of the radicals R¹ are methyl radicals,
and the radicals
R² have the meaning of the radicals R¹ or are hydrogens, but at least one radical R² is a hydrogen,
and the indices
a have an average value from 0 to 100 and
b have an average value from 0 to 5.

3. Organopolysiloxanes according to Claim 1 or 2, characterized in that, as compounds containing acrylate groups, esters of acrylic acid with dihydric to hexahydric aliphatic straight-chain or branched alcohols are reacted in an addition reaction with the SiH group(s) of the organopolysiloxane.

4. Organopolysiloxanes according to Claim 3, characterized in that, as compounds containing acrylate groups, 1,6-hexanediol acrylate, neopentyl glycol diacrylate, tetraethylene glycol diacrylate, polypropylene glycol diacrylate, glycerol triacrylate, trimethylolpropane triacrylate or pentaerythritol tetraacrylate are reacted in an addition reaction with the organopolysiloxane.

5. Organopolysiloxanes according to one or more of the preceding claims, characterized in that the hydrosilylation is carried out in the presence of rhodium catalysts which are selected from the group consisting of RhX₃.xH₂O, RhX₃(SR²₃)₃, RhX(R³₃P)₃, RhX(CO)(R³₃P)₃, RhH(R³₃P)₄, RhR⁴₃, Rh(CO)₂R⁴, [RhX(olefin)]₂, where
X is a halogen, preferably chlorine,
R³ is an alkyl radical having 1 to 20 carbon atoms, an alkenyl radical having 2 to 20 carbon atoms or the radical R³₃SiQ (Q = divalent aliphatic radical having 1 to 6 carbon atoms),
R⁴ is the 2,4-pentanedionato radical,
olefin is cyclooctadiene or norbornadiene and
x is a number from 0 to 4.

6. Organopolysiloxanes according to Claim 5, characterized in that the hydrosilylation is carried out in the presence of one of the following rhodium catalysts: RhCl(Ph₃P)₃ (Ph = phenyl), PhCl₃.3H₂O, [RhCl(ethylene)₂]₂ or [RhCl(cyclooctadiene)]₂.

7. Use of the organopolysiloxanes according to Claim 1 to 5 as curable binders or as curable, abhesive coating compositions, alone or in a mixture with further, conventional, curable, acrylate-based coating compositions.

## Revendications

1. Organopolysiloxanes, qui présentent en position terminale et/ou latérale au moins un radical de formule 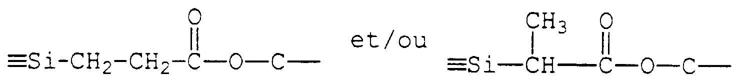 et/ou 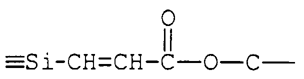 ainsi qu'au moins un radical acrylate lié par un pont à ce radical, que l'on peut obtenir par hydrosilylation d'organopolysiloxanes, comportant au moins un radical SiH, avec des composés qui présentent au moins deux radicaux acrylate, en quantités équimolaires à des températures de 60 à 130°C en présence de catalyseurs au rhodium.

2. Organopolysiloxanes suivant la revendication 1, caractérisés en ce que l'on réalise l'hydrosilylation avec des hydrogénopolysiloxanes de formule générale 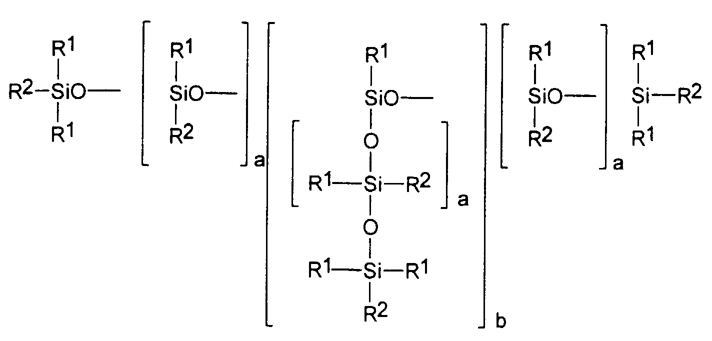 dans laquelle :
les radicaux R¹ sont identiques ou différents et sont des radicaux alcoyle avec 1 à 4 atomes de carbone ou des radicaux phényle, au moins 90% des radicaux R¹ étant toutefois des radicaux méthyle;
les radicaux R² ont la signification des radicaux R¹ ou sont des radicaux hydrogène, au moins un radical R² étant toutefois un radical hydrogène, et
les indices
a ont une valeur moyenne de O à 100, et
b ont une valeur moyenne de 0 à 5.

3. Organopolysiloxanes suivant la revendication 1 ou 2, caractérisés en ce que l'on additionne sur le ou les radicaux SiH de l'organopolysiloxane, comme composés contenant des radicaux acrylate, des esters de l'acide acrylique d'alcools linéaires ou ramifiés aliphatiques di- à hexavalents.

4. Organopolysiloxanes suivant la revendication 3, caractérisés en ce que l'on additionne sur l'organopolysiloxane, comme composés contenant des radicaux acrylate, l'acrylate de 1,6-hexanediol, le diacrylate de néopentylglycol, le diacrylate de tétraéthylèneglycol, le diacrylate de polypropylèneglycol, le triacrylate de glycérol, le triacrylate de triméthylolpropane ou le tétraacrylate de pentaérythrytol.

5. Organopolysiloxanes suivant une ou plusieurs des revendications précédentes, caractérisés en ce que l'on réalise l'hydrosilylation en présence de catalyseurs au rhodium, qui sont choisis dans le groupe RhX₃·xH₂O, RhX₃(SR²₃)₃, RhX(R³₃P)₃, RhX(CO)(R³₃P)₃, RhH(R³₃P)₄, RhR⁴₃, Rh(CO)₂R⁴, [RhX(oléfine)]₂,
X étant un radical halogéno, de préférence le radical chloro;
R³ étant un radical alcoyle avec 1 à 20 atomes de carbone, un radical alcényle avec 2 à 20 atomes de carbone, ou le radical R³₃SiQ (Q=radical aliphatique divalent avec 1 à 6 atomes de carbone);
R⁴ étant le radical 2,4-pentanedionato;
Oléfine étant le cyclooctadiène ou le norbornadiène, et
x étant un nombre de 0 à 4.

6. Organopolysiloxanes suivant la revendication 5, caractérisés en ce que l'on réalise l'hydrosilylation en présence d'un des catalyseurs au rhodium suivants : RhCl(Ph₃P)₃ (Ph=phényl), RhCl₃·3H₂O, [RhCl(éthylène)₂]₂ ou [RhCl(cyclooctadiène)]₂.

7. Utilisation des organopolysiloxanes suivant l'une quelconque des revendications 1 à 5 comme liant durcissable ou comme matière de revêtement non adhésive, durcissable, seuls ou en mélange avec d'autres matières de revêtement durcissables à base d'acrylate connues en soi.
